# EUROPEAN PATENT APPLICATION

(11) **EP 4 764 247 A1**
(43) Date of publication of application: **24.06.2026**
(21) Application number: 24903173.3
(22) Date of filing: 30.05.2024
(51) Int. Cl.: F16D 67/00, F16D 1/02, F16D 7/02, F16D 41/20

(54) **ANGULAR POSITION HOLDING DEVICE**

(30) Priority: 15.12.2023 JP 2023212089
(71) Applicant: Origin Company, Limited, Saitama-shi Saitama 338-0823 (JP); Porite Corporation, Saitama 362-0806 (JP)
(72) Inventor: ISOBE, Taro, Saitama-shi, Saitama 338-0823 (JP); NEGISHI, Yukio, Saitama-shi, Saitama 338-0823 (JP); MIZUYAMA, Yuta, Saitama-shi, Saitama 338-0823 (JP); IKEGAWA, Shiori, Saitama-shi, Saitama 338-0823 (JP); YONEKURA, Kana, Saitama-shi, Saitama 338-0823 (JP); MACHIDA, Tomonori, Kumagaya-shi, Saitama 360-0234 (JP); KAMANAKA, Yasuhiko, Kumagaya-shi, Saitama 360-0234 (JP)
(74) Representative: Müller-Boré & Partner Patentanwälte PartG mbB
(86) International application number: PCT/JP2024/019809
(87) International publication number: WO 2025/126509

(57) **Abstract**

A new angular-position holding apparatus including a joint member (4) capable of integral molding by powder metallurgy regardless of disposition of a female engaging portion (16) and a male engaging portion (18) coaxially at different positions in an axial direction is provided. In the joint member 4, an annular thick part 21 is provided at a corner part between an outer-peripheral surface of an other-side bearing portion 14 having the male engaging portion 18 and an axial-direction other-side surface of an intermediate plate 10.

## Description

### Technical Field

The present invention relates to an angular-position holding apparatus including a joint member for connecting an input-side device and an output-side device to each other, a braking-torque applying means for applying a required braking torque to the joint member, and a supporting means for supporting the braking-torque applying means.

### Background Art

The following PTL 1 discloses an angular-position holding apparatus attached to a shaft for transmitting a rotational torque from an input-side device such as an electric motor to an output-side device such as a hatchback of a vehicle, and when the rotational torque is input from the input-side device, the shaft is allowed to rotate against the required braking torque, while when the rotational torque is not input from the input-side device, the shaft is held by the required braking torque, that is, even when driving of the input-side device is stopped, an angular position of the output-side device is held.

### Citation List

### Patent Literature

PTL 1: Japanese Patent No. 6815567

### Summary of Invention

### Technical Problem

In the angular-position holding apparatus disclosed in the above-described PTL 1, the shaft extending from the input-side device is directly connected to the output-side device, but depending on the constitutions of the input-side device and the output-side device, both the input-side device and the output-side device include shafts for transmitting rotation in some cases. In this case, the both shafts are connected by the angular-position holding apparatus. That is, the angular-position holding apparatus also functions as a joint, and the shaft extending from the input-side device and the shaft extending from the output-side device are connected via the angular-position holding device. Here, when both of the shaft extending from the input-side device and the shaft extending from the output-side device include male engaged portions, the joint member includes a female engaging portion that engages with the male engaged portion, and when both of the shafts include the female engaged portions, the joint member includes the male engaging portion that engages with the female engaged portion. On the other hand, when the shaft extending from the input-side device and the shaft extending from the output-side device mutually include the male engaged portion and the female engaged portion, respectively, the joint member includes the female engaging portion and the male engaging portion that engage with the male engaged portion and the female engaged portion. The female engaging portion and the male engaging portion are coaxially disposed.

In addition, the braking-torque applying means included in the angular-position holding apparatus disclosed in the above-described PTL 1 is a coil spring. The coil spring is attached to an outer-peripheral surface of an inner ring through which the above-described shaft penetrated. And the inner ring is rotated against a braking torque caused by a tightening force of the coil spring, that is, the inner ring slides with respect to the coil spring. Thus, it is necessary that the inner ring has a considerable strength including wear-resistance and is manufactured by powder metallurgy. The braking-torque applying means is not limited to the coil spring but can be a leaf spring, a so-called ring spring or the like.

When the above-described joint member, that is, the joint member in which the female engaging portion and the male engaging portion are coaxially disposed, respectively, is to be used as an inner ring of the angular-position holding apparatus disclosed in the above-described PTL 1, since it is necessary to provide a cylindrical portion for attaching the coil spring to the joint member, the female engaging portion and the male engaging portion cannot be disposed at the same position in an axial direction but they need to be disposed at different positions in the axial direction on the same axis. The same applies to a case in which the braking-torque applying means is other than the coil spring. Therefore, the joint member as above includes an intermediate plate disposed perpendicularly to the axial direction, a cylindrical one-side bearing portion extending in the axial direction from an axial-direction one-side surface of this intermediate plate, and the other-side bearing portion extending in the axial direction from an axial-direction other-side surface of the intermediate plate, the one-side bearing portion and the other-side bearing portion have a common central axis, and the female engaging portion is formed on an inner-peripheral surface of the one-side bearing portion, while the male engaging portion is formed on an outer peripheral surface of the other-side bearing portion, respectively.

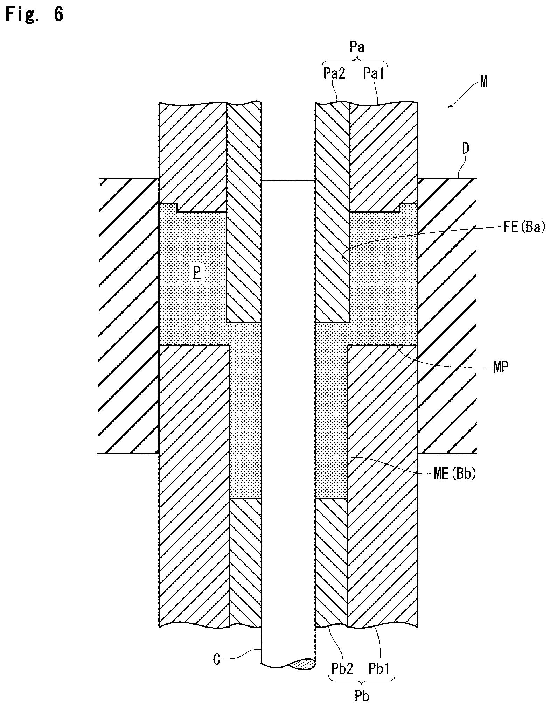

In order to integrally manufacture the joint member as above by powder metallurgy, a molding die M as illustrated in Fig. 6 is generally used. Explaining with reference to Fig. 6, the molding die M includes a die D penetrating in the axial direction and defining an outer-peripheral surface of a joint member P by an inner-peripheral surface, a one-side punch Pa entering from one end of a through hole included in the die D, the other-side punch Pb entering from the other end of the through hole included in the die D, and a shaft-shaped core C penetrated into the one-side punch Pa and the other-side punch Pb. The one-side punch Pa further includes a one-side outer punch Pa1 defining an axial-direction one-side end surface of a one-side bearing portion Ba by an axial-direction end surface, and a one-side inner punch Pa2 defining an axial-direction one-side surface of an intermediate plate MP by an axial-direction end surface and defining a female engaging portion FE by the outer-peripheral surface. The other-side punch Pb further includes an other-side outer punch Pb1 whose axial-direction end surface defines an axial-direction other-side surface of the intermediate plate MP and whose inner-peripheral surface defines a male engaging portion ME, and an other-side inner punch Pb2 whose axial-direction end surface defines an axial-direction other-side end surface of an other-side bearing portion Bb. After the powder material is filled inside of the die D, and the one-side punch Pa and the other-side punch Pb are combined as required, by causing the one-side punch Pa and the other-side punch Pb to be moved in a direction in which the one-side punch Pa and the other-side punch Pb are brought closer to each other inside of the die D, the powder material filled inside of the die D is compressed/molded into the shape of the joint member P. At this time, due to a relatively short distance between an outer-peripheral edge part of the one-side inner punch Pa2 and an inner-peripheral edge part of the other-side outer punch Pb1 when seen in the axial direction, there is a concern that a corner part of the outer-peripheral surface of the other-side bearing portion Bb and the axial-direction other-side surface of the intermediate plate MP and a corner part between an inner-peripheral surface of the one-side bearing portion Ba and an axial-direction one-side surface of the intermediate plate MP on which a load is applied in a concentrated manner is fractured or the molding die M is damaged. In addition, even if the above-described corner part is not broken or the molding die M is not damaged at the compression molding, there is a concern that the above-described corner part is broken when the molding taken out of the molding die M is sintered.

The present invention was made in view of the above-described facts and its main technical problem is to provide a new and improved angular-position holding apparatus including a joint member which can be integrally molded by powder metallurgy regardless of disposition of the female engaging portion and the male engaging portion at different positions in the axial direction on the same axis.

### Solution to Problem

As the result of keen examination, the inventors found out that, the above-described main technical problems could be solved by providing an annular thick part at a corner part between an outer peripheral surface of the other-side bearing portion having a male engaging portion and an axial-direction other-side surface of the intermediate plate in the joint member.

That is, according to the present invention, as an angular-position holding apparatus which solves the above-described main technical problem, such an angular-position holding apparatus is provided, in an angular-position holding apparatus, including a joint member for connecting an input-side device and an output-side device to each other, a braking-torque applying means for applying a required braking torque to the joint member, and a supporting means for supporting the braking-torque applying means, in which when a rotational torque is input from the input-side device, the joint member is rotated against the required braking torque with respect to the braking-torque applying means, while when a rotational torque is not input from the input-side device, the joint member is held by the required braking torque,
the joint member includes an intermediate plate disposed perpendicularly to the axial direction, a cylindrical one-side bearing portion extending in the axial direction from an axial-direction one-side surface of the intermediate plate, and an other-side bearing portion extending in the axial direction from the axial-direction other-side surface of the intermediate plate, in which the one-side bearing portion and the other-side bearing portion have a common central axis, and a female engaging portion is formed on an inner-peripheral surface of the one-side bearing portion and a male engaging portion is formed on an outer-peripheral surface of the other-side bearing portion, respectively, and
at a corner part between the outer-peripheral surface of the other-side bearing portion and the axial-direction other-side surface of the intermediate plate, an annular thick part is provided.

Preferably, an outer-peripheral surface of the thick part has a tapered shape inclined inward in a radial direction toward the axial-direction other-side. Preferably, an auxiliary thick part is provided inside of the female engaging portion on the axial-direction one-side surface of the intermediate plate. It is preferable that, in the intermediate plate and the other-side bearing portion, a circular through hole communicating with an inside of the one-side bearing portion is formed. It is preferable that the intermediate plate has a disk shape, the one-side bearing portion has a cylindrical shape extending from an outer-peripheral edge of the intermediate plate to the axial-direction one-side, and the braking-torque applying means is a coil spring disposed on an outer-peripheral surface of the one-side bearing portion and/or an outer-peripheral surface of the intermediate plate. Preferably, the supporting means is a fixed housing, and the braking-torque applying means is accommodated inside of the housing. The male engaging portion and the female engaging portion are both preferably serrations or splines. In this case, pitch diameters the male engaging portion and the female engaged portion are preferably the same.

### Advantageous Effects of Invention

In the angular-position holding apparatus constituted in accordance with the present invention, since an annular thick part is provided at a corner part between the outer-peripheral surface of the other-side bearing portion having a male engaging portion and the axial-direction other-side surface of the intermediate plate in the joint member, and the outer-peripheral surface of the above-described thick part is defined by the inner-peripheral edge part of the axial-direction distal end surface of the other-side outer punch of the molding die, an interval between the outer-peripheral edge part of the axial-direction distal end surface of the one-side inner punch and the inner-peripheral edge part of the axial-direction distal end surface of the other-side outer punch are separated, and a load acting on the powder material present between them is relaxed. As a result, fracture of a corner part on which a load is applied to the corner part in a concentration manner or damage of the molding die at the compression molding, or fracture of the corner part when the molding taken out of the molding die is sintered can be prevented.

### Brief Description of Drawings

[Fig. 1] Fig. 1 is a diagram illustrating a preferred Embodiment of an angular-position holding apparatus constituted in accordance with the present invention.
[Fig. 2] Fig. 2 is a diagram illustrating a joint member of the angular-position holding apparatus shown in Fig. 1 as a single body.
[Fig. 3] Fig. 3 is a diagram illustrating a housing of the angular-position holding apparatus shown in Fig. 1 as a single body.
[Fig. 4] Fig. 4 is a diagram for explaining a process for molding a joint member illustrated in Fig. 2.
[Fig. 5] Fig. 5 is a diagram illustrating a part of the diagram for explaining a compression process in Fig. 4 in an enlarged manner.
[Fig. 6] Fig. 6 is a diagram illustrating a molding die for molding an Embodiment of the joint member.

### Description of Embodiments

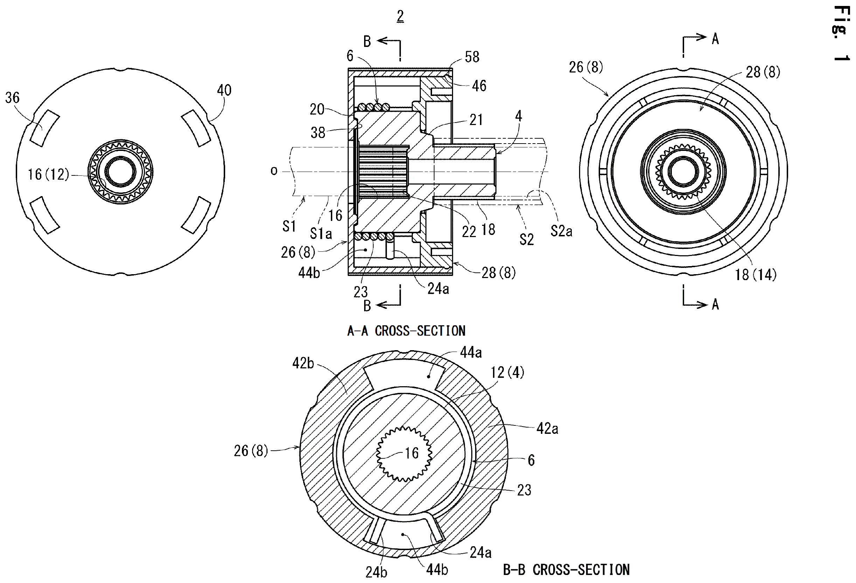

Hereinafter, with reference to the attached drawings illustrating a preferred Embodiment of an angular-position holding apparatus constituted in accordance with the present invention, explanation will be made in further detail. It is to be noted that, with reference to the words such as an "axial-direction one-side" and an "axial-direction other-side" in the following explanation, the "axial-direction one-side" is supposed to refer to the left side in the drawings and the "axial-direction other-side" to the right side in the drawings with the state illustrated on the A-A cross-section in Fig. 1 as a reference unless otherwise specified in particular.

Explaining with reference to Fig. 1, the angular-position holding apparatus illustrated as a whole by the numeral 2 includes the joint member 4, the braking-torque applying means 6, and the supporting means 8.

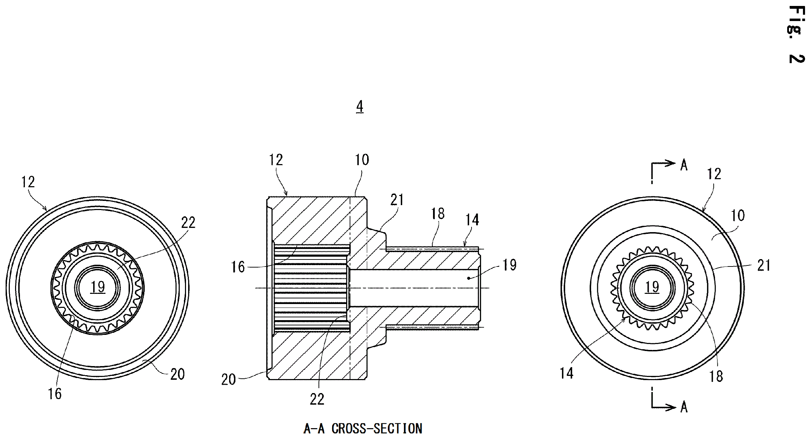

The joint member 4 connects a shaft S1 extending from either one of the input-side device and the output-side device with a shaft S2 extending from the other thereof, and causes the shaft S1 and the shaft S2 to be integrally rotated. The rotation axis of the joint member 4 is referred to as o. The joint member 4 is integrally molded by powder metallurgy. The molding method will be described later. Explaining with reference to Fig. 2 together with Fig. 1, the joint member 4 includes an intermediate plate 10 disposed perpendicularly to the axial direction (this is indicated by a two-dot chain line for convenience in an A-A line cross-sectional view in Fig. 2), a one-side bearing portion 12 extending in the axial direction from axial-direction one-side surface of the intermediate plate 10, and an other-side bearing portion 14 extending in the axial direction from the axial-direction other-side surface of the intermediate plate 10, and the one-side bearing portion 12 and the other-side bearing portion 14 have a common central axis. The central axis as above is also in common with the above-described rotation axis o. And a female engaging portion 16 is formed on an inner-peripheral surface of the one-side bearing portion 12, and a male engaging portion 18 is formed on an outer-peripheral surface of the other-side bearing portion 14, respectively. In the illustrated Embodiment, the intermediate plate 10 has a disk shape, and a circular through hole 19 is formed in the intermediate plate 10 and the other-side bearing portion 14 so as to penetrate them in the axial direction and communicate with the inside of the one-side bearing portion 12. The through hole 19 is formed at the center of the intermediate plate 10. The one-side bearing portion 12 has a cylindrical shape extending from the outer-peripheral edge of the intermediate plate 10 to the axial-direction one-side. An annular supporting protrusion 20 extending in the circumferential direction is formed on the outer-peripheral edge of the axial-direction one-side end surface of the one-side bearing portion 12. The female engaging portion 16 and the male engaging portion 18 are both serrations, and their pitch diameters are approximately the same. In the illustrated Embodiment, the pitch diameter of the female engaging portion 16 is slightly larger than the pitch diameter of the male engaging portion 18, and its difference is 2.0%. The above-described difference is preferably within 20%, and more preferably within 10%. The female engaging portion 16 and the male engaging portion 18 are engaged with a male engaged portion S1a constituted by a serration formed at the end part of the shaft S1 and a female engaged portion S2a constituted by a serration formed at the end part of the shaft S2, respectively. Here, in the angular-position holding apparatus constituted in accordance with the present invention, it is important that the annular thick part 21 is provided at a corner part between the outer-peripheral surface of the other-side bearing portion 14 and the axial-direction other-side surface of the intermediate plate 10 in the joint member 4. In the illustrated Embodiment, the outer-peripheral surface of the thick part 21 has a tapered shape inclined radially inward toward the axial-direction other-side. In the illustrated Embodiment, an auxiliary thick part 22 is also formed inside of the female engaging portion 16 on the axial-direction one-side surface of the intermediate plate 10. The auxiliary thick part 22 has an annular shape surrounding the outer-peripheral edge of the through hole 19 and is separated from the female engaging portion 16. The thick part 21 and the auxiliary thick part 22 will be described later together with a molding process of the joint member 4.

Explaining with reference to Fig. 1, in the illustrated Embodiment, the braking-torque applying means 6 is a coil spring (hereinafter, the coil spring is indicated also by the number 6 in some cases) and includes a winding portion 23 around which a wire rod made of metal is wound in a spiral state and a pair of hook portions 24a and 24b in which the above-described wire rods extend outward in the radial direction from the winding portion 23. The pair of hook portions 24a and 24b are constituted by both end parts of the above-described wire rod. Therefore, the pair of hook portions 24a and 24b are provided on both ends of the winding portion 23 in the axial direction, respectively. When the coil spring 6 is in a free state, that is, in such a state that the coil spring 6 does not receive any external force, the inner diameter of the winding portion 23 is smaller than the outer diameter of the one-side bearing portion 12 of the joint member 4. Thus, the coil spring 6 is attached in close contact with the outer-peripheral surface of the one-side bearing portion 12 in a state in which the inner diameter of the winding portion 23 is expanded. If desired, the coil spring 6 may be attached to the outer-peripheral surface of the one-side bearing portion 12 and/or the outer-peripheral surface of the intermediate plate 10.

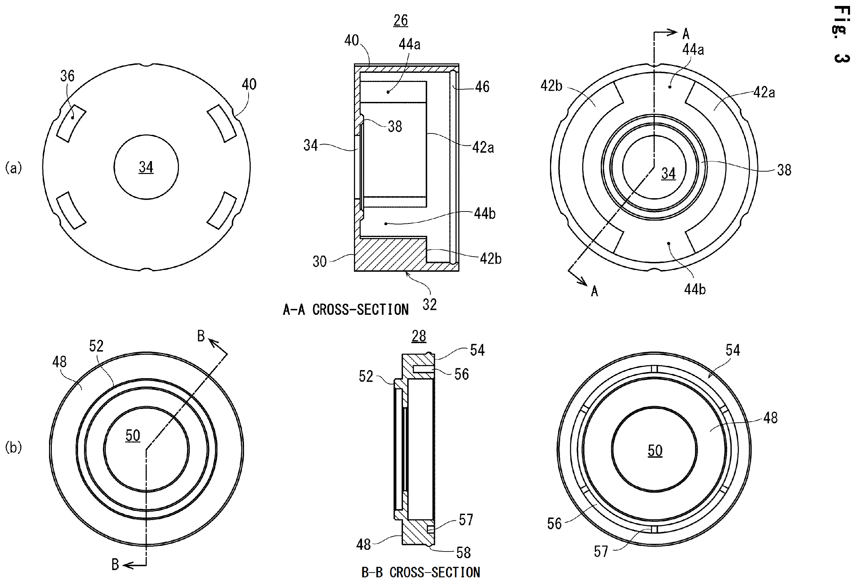

In the illustrated Embodiment, the supporting means 8 is a fixed housing, and the joint member 4 and the braking-torque applying means (coil spring 6) are accommodated inside of the housing. Explaining with reference to Fig. 1 and Fig. 3, the housing is made of a synthetic resin and includes a housing main-body 26 illustrated in Fig. 3(a) and a shield 28 illustrated in Fig. 3(b). The housing main-body 26 has a circular end plate 30 disposed perpendicularly to the axial direction and a cylindrically-shaped outer-peripheral wall 32 extending from the outer-peripheral edge of the end plate to the axial-direction other-side. At a center of the end plate 30, a circular through hole 34 penetrating in the axial direction is formed. On the outer-peripheral edge part on the axial-direction one-side surface of the end plate 30, four pieces of arc-shaped holding recess parts 36, each having a required circumferential-direction width, are formed at intervals in the circumferential direction. On the axial-direction other-side surface of the end plate 30, annular-shaped supported protrusions 38 surrounding the outer-peripheral edge of the through hole 34 are formed. The supported protrusions 38 are located inside of the supporting protrusion 20 of the joint member 4 so as to support the same and also support the axial-direction one-side end surface of the joint member 4. On the outer-peripheral surface of the outer-peripheral wall 32, 6 pieces of holding recess grooves 40, each having an arc-shaped cross section extending linearly across the whole area in the axial direction, are formed at equal angular intervals in the circumferential direction. The housing main-body 26 is fixed via the holding recess part 36 and the holding recess groove 40. On an inner-peripheral surface of the outer-peripheral wall 32, a pair of locking walls, each having an arc-shaped cross section extending to a required degree in the axial direction from the axial-direction other-side surface of the end plate 30, are provided with an interval in the circumferential direction (each of the locking walls is indicated by 42a and 42b), and between the pair of locking walls 42a and 42b, a pair of clearances 44a and 44b are present. The inner-peripheral surfaces of the pair of locking walls 42a and 42b are faced with the outer surfaces of the winding portion 23 of the coil spring 6, and in the clearance 44b, the pair of hook portions 24a and 24b are fitted in common. Thus, the coil spring 6 is supported in such a state that rotation is not possible with respect to the supporting means 8. On the axial-direction other-side end part of the inner-peripheral surface of the outer-peripheral wall 32, an annular-shaped locking groove 46 extending in the circumferential direction is formed.

The shield 28 includes a circular shield plate 48 disposed perpendicularly to the axial direction. At the center of the shield plate 48, a circular through hole 50 penetrating in the axial direction is formed, and in the through hole 50, an axial-direction one-side end part of the other-side bearing portion 14 is inserted. On the axial-direction one-side surface of the shield plate 48, an annular-shaped support wall 52 surrounding the outer-peripheral edge of the through hole 50 is formed. On the axial-direction other-side surface of the shield plate 48, a cylindrically-shaped attaching wall 54 extending in the axial direction from the outer-peripheral edge is formed. On the attaching wall 54, an annular-shaped peripheral groove 56 opened toward the axial-direction other-side is formed, and in the peripheral groove 56, 6 ribs 57 are disposed at equal angular intervals in the circumferential direction. On the outer-peripheral surface of the attaching wall 54, an annular-shaped locking protrusion 58 extending in the circumferential direction is formed, and when the locking protrusion 58 is locked in the locking groove 46 formed in the inner-peripheral surface of the outer-peripheral wall 32 of the housing main-body 26, the shield 28 is combined with the housing main-body 26. Then, the axial-direction one-side surface of the shield plate 48 supports the axial-direction other-side surface of the intermediate plate 10 in the joint member 4 in the axial direction, and the inner-peripheral surface of the support wall 52 supports the outer-peripheral surface of the intermediate plate 10 in the radial direction.

The angular-position holding apparatus 2 is operated as follows. That is, since the shaft S1, the joint member 4, and the shaft S2 are integral, when a rotational torque is input from the input-side device, the joint member 4 tries to rotate together with the coil spring 6. At this time, as described above, since the coil spring 6 is unable to be rotated with respect to the supporting means 8 (housing), either one of the pair of hook portions 24a and 24b is pushed to a direction in which the coil spring 6 is relatively loosened by the circumferential-direction side surface of either one of the pair of locking walls 42a and 42b in the clearance 44b formed in the housing main-body 26, and the joint member 4 is rotated with respect to the coil spring 6 against the required braking torque by the fastening force of the coil spring 6. That is, the rotational torque from the input-side device is transmitted to the output-side device and drives this. On the other hand, when the rotational torque from the input-side device is not input, the joint member 4 is held by the required braking torque by the coil spring 6. Therefore, the angular position of the output-side device is held.

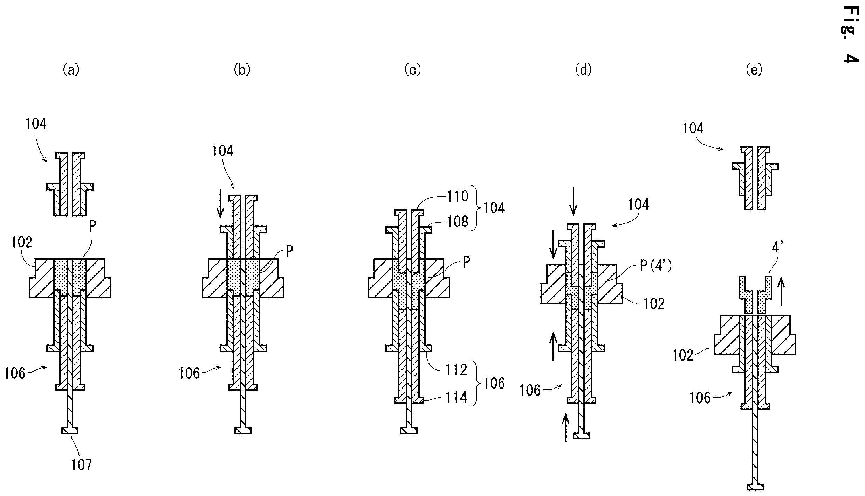

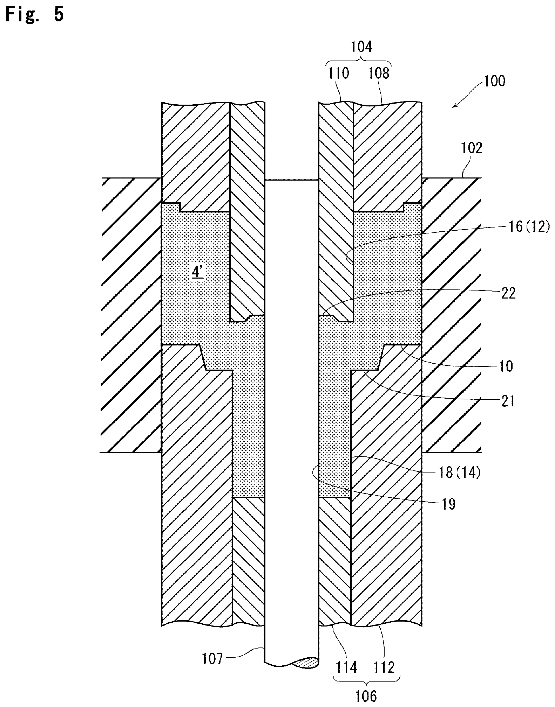

Subsequently, a process of integrally molding the above-described joint member 4 by powder metallurgy will be explained with reference to Fig. 4 and Fig. 5. Fig. 4 illustrates the whole view of the molding process and Fig. 5 illustrates a diagram showing the compression process shown in Fig. 4, respectively.

First, the molding die 100 for molding the joint member 4 will be explained with reference to Fig. 5. The molding die 100 includes a die 102 penetrating in the axial direction, a one-side punch 104 entering a through hole provided in the die 102 from one end thereof, an other-side punch 106 entering from the other end of the same, and a shaft-shaped core 107 penetrating into the one-side punch 104 and the other-side punch 106. The inner-peripheral surface of the die 102 defines an outer-peripheral surface of the joint member 4, and the core 107 defines the through hole 19 of the joint member 4, respectively. The one-side punch 104 further includes a one-side outer punch 108 whose axial-direction end surface defines an axial-direction one-side end surface of the one-side bearing portion 12, and a one-side inner punch 110 whose axial-direction end surface defines an axial-direction one-side surface of the intermediate plate 10 and an outer-peripheral surface defines the female engaging portion 16. The other-side punch 106 further includes an other-side outer punch 112 whose axial-direction end surface defines an axial-direction other-side surface of the intermediate plate 10 and whose inner-peripheral surface defines the male engaging portion 18, and an other-side inner punch 114 whose axial-direction end surface defines an axial-direction other-side end surface of the other-side bearing portion 14. The axial-direction distal end surface of the one-side outer punch 108 is faced with the axial-direction distal end surface of the other-side outer punch 112, and the axial-direction distal end surface of the one-side inner punch 110 is faced with the axial-direction distal end surface of the other-side inner punch 114, while the one-side outer punch 108 and the one-side inner punch 110 as well as the other-side outer punch 112 and the other-side inner punch 114 are all capable of advancing/retreating with respect to the die 102.

Subsequently, with reference to Fig. 4, a process of molding the joint member 4 by using the molding die 100 will be explained. Firstly, as shown in Fig. 4(a), a powder material P made of metal is filled inside of the die 102. At this time, either one of the one-side punch 104 and the other-side punch 106 blocks one end of the through hole provided in the die 102. In the illustrated Embodiment, first, the other-side punch 106 blocks the other end of the above-described through hole, and after the powder material P is input into the die 102, as shown in Fig. 4(b), the one-side punch 104 blocks one end of the above-described through hole. Then, from the state shown in Fig. 4(b), the one-side outer punch 108 and the one-side inner punch 110 constituting the one-side punch 104 as well as the other-side outer punch 112 and the other-side inner punch 114 constituting the other-side punch 106 move as required without applying an excessive pressure to the powder material P, respectively, and make a similar shape as the joint member 4 molding a space filled with the powder material P. Such a process is called transfer, which is a well-known art for those skilled in the art. Fig. 4(c) illustrates a state after the transfer. And after the above-described transfer is executed, as shown in Fig. 4(d), since the one-side punch 104 and the other-side punch 106 are moved in a direction in which they get closer to each other inside of the die 102, the powder material P filled inside of the die 102 is compressed/molded into the shape of the joint member 4. After that, as shown in Fig. 4(e), the one-side punch 104 and the other-side punch 106 move with respect to the die 102, and a joint-member molding 4' which is compressed/molded is taken out. After that, the taken-out joint member molding 4' is sintered by an appropriate furnace, whereby the joint member 4 is formed.

Explaining with reference to Fig. 5, in the angular-position holding apparatus constituted in accordance with the present invention, the annular thick part 21 is provided at the corner part between the outer-peripheral surface of the other-side bearing portion 14 having the male engaging portion 18 and the axial-direction other-side surface of the intermediate plate 10 in the joint member 4 (4'), and since the outer-peripheral surface of the thick part 21 as above is defined by the inner-peripheral edge part of the axial-direction distal end surface of the other-side outer punch 112 of the molding die 100, an interval between the outer-peripheral edge part of the axial-direction distal end surface of the one-side inner punch 110 and the inner-peripheral edge part of the axial-direction distal end surface of the other-side outer punch 112 is separated, and the load acting on the powder material P present in between is relaxed. Therefore, fracture of the corner part in which a load is applied on the above-described corner part in a concentrated manner at the compression molding or breakage of the molding die 100, and fracture of the above-described corner part when the joint-member molding body 4' (molding) taken out of the molding die 100 is sintered is prevented. Thus, though the female engaging portion 16 and the male engaging portion 18 are disposed at positions in the different axial directions on the same axis, the angular-position holding apparatus including the joint member 4 capable of integral molding by powder metallurgy can be obtained. In the illustrated Embodiment, since the outer-peripheral surface of the thick part 21 has a tapered shape inclined inward in the radial direction toward the axial-direction other-side, the other-side outer punch 112 is favorably released. In the illustrated Embodiment, furthermore, due to the provision of the auxiliary thick part 22 inside of the female engaging portion 16 on the axial-direction one-side surface of the intermediate plate 10, a load acting on the above-described corner part at the compression molding is further relaxed due to an increase in a capacity in the vicinity of the above-described corner part. The auxiliary thick part 22 supports the axial-direction other-side end surface of the shaft S1 and also functions as positioning of this. At this time, since the outer-peripheral edge part of the axial-direction other-side end surface of the shaft S1 is usually chamfered, it is preferable that the auxiliary thick part 22 is separated from the female engaging portion 16 and is disposed relatively on the inner side in the radial direction.

As above, the angular-position holding apparatus constituted in accordance with the present invention has been described in detail with reference to the attached drawings, but the present invention is not limited to the above-described Embodiments but is capable of appropriate modification or change within a range not departing from the present invention. For example, in the illustrated Embodiment, the female engaging portion 16 and the male engaging portion 18 are both serrations but may be splines. In addition, since it is only necessary for the braking-torque applying means to give a required braking torque to the joint member, it is not limited to a coil spring but can be replaced with various means such as a plate spring or a so-called ring spring and the like. Moreover, since it is only necessary that the supporting means supports the braking-torque applying means, it does not necessarily have to be a housing. In a case in which the braking-torque applying means is a coil spring, the supporting means may be an appropriate hooked portion for supporting the pair of hook portions, for example.

### Description of Reference Numerals

- 2: Angular-position holding apparatus
- 4: Joint member
- 6: Braking-torque applying means (coil spring)
- 8: Supporting means (housing)
- 10: Intermediate plate
- 12: One-side bearing portion
- 14: Other-side bearing portion
- 16: Female engaging portion
- 18: Male engaging portion
- 21: Thick part
- 22: Auxiliary thick part

## Claims

1. An angular-position holding apparatus, comprising: a joint member for connecting an input-side device and an output-side device to each other; a braking-torque applying means for applying a required braking torque to the joint member, and a supporting means for supporting the braking-torque applying means, when a rotational torque is input from the input-side device, the joint member is rotated against the required braking torque with respect to the braking-torque applying means, while when a rotational torque is not input from the input-side device, the joint member is held by the required braking torque, wherein
the joint member includes an intermediate plate disposed perpendicularly to an axial direction, a cylindrical one-side bearing portion extending in the axial direction from an axial-direction one-side surface of the intermediate plate, and an other-side bearing portion extending in the axial direction from an axial-direction other-side surface of the intermediate plate, in which the one-side bearing portion and the other-side bearing portion have a common central axis, and a female engaging portion is formed on an inner-peripheral surface of the one-side bearing portion and a male engaging portion is formed on an outer-peripheral surface of the other-side bearing portion, respectively, and
at a corner part between the outer-peripheral surface of the other-side bearing portion and the axial-direction other-side surface of the intermediate plate, an annular thick part is provided.

2. The angular-position holding apparatus of claim 1, wherein an outer-peripheral surface of the thick part has a tapered shape inclined inward in a radial direction toward the axial-direction other-side.

3. The angular-position holding apparatus of claim 1, wherein, on an inner side of the female engaging portion on the axial-direction one-side surface of the intermediate plate, an auxiliary thick part is provided.

4. The angular-position holding apparatus of claim 1, wherein, in the intermediate plate and the other-side bearing portion, a circular through hole communicating with an inside of the one-side bearing portion is formed.

5. The angular-position holding apparatus of claim 1, wherein the intermediate plate has a disk shape, the one-side bearing portion has a cylindrical shape extending to an axial-direction one-side from an outer-peripheral edge of the intermediate plate, and the braking-torque applying means is a coil spring disposed on an outer-peripheral surface of the one-side bearing portion and/or an outer-peripheral surface of the intermediate plate.

6. The angular-position holding apparatus of claim 1, wherein the supporting means is a fixed housing, and the braking-torque applying means is accommodated inside of the housing.

7. The angular-position holding apparatus of claim 1, wherein the male engaging portion and the female engaging portion are both serrations or splines.

8. The angular-position holding apparatus of claim 7, wherein pitch diameters of the male engaging portion and the female engaging portion are the same degree.
